(19) **Europäisches Patentamt / European Patent Office / Office européen des brevets**

(11) **EP 2 719 480 A1**

(12) **EUROPEAN PATENT APPLICATION**
published in accordance with Art. 153(4) EPC

(43) Date of publication:
16.04.2014 Bulletin 2014/16

(21) Application number: 12796265.2

(22) Date of filing: 05.06.2012

(51) Int Cl.:
*B21F 27/16* (2006.01)   *A47C 27/06* (2006.01)
*B21F 35/02* (2006.01)   *F16F 1/04* (2006.01)

(86) International application number:
**PCT/ES2012/000154**

(87) International publication number:
**WO 2012/168508 (13.12.2012 Gazette 2012/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 06.06.2011 ES 201100640
08.05.2012 ES 201200483

(71) Applicant: **Gestarsic, S.L.**
**50500 Tarazona - Zaragoza (ES)**

(72) Inventor: **TARAZONA SICILIA, Jorge**
**E-50500 Tarazona - Zaragoza (ES)**

(74) Representative: **Lehmann Novo, Maria Isabel**
**Alvarez de Baena, 4**
**28006 Madrid (ES)**

(54) **SPRING FOR DIRECTABLE DAMPING, AND METHOD AND DEVICE FOR THE PRODUCTION THEREOF**

(57)   The spring is intended to form a directional damping mean, which presents the particular feature that the spirals (2) thereof are especially configured in such a way that when the spring is compressed, said spirals (2) and the upper spiral (3) itself, upon which the push force is applied, in addition to undergoing a vertical displacement, also undergo a crosswise displacement towards one side, depending on the orientation of the spirals (2), which gives rise to a directional damping of the force exerted on the body in which the springs (1) are applied, which may be a mattress (5), a seat, pillow or cushion, etc. Said spring (1) is obtained based on a method that consists in positioning a spring with conventional "S" shaped spirals and fastening it via the two end spirals thereof, in order to give rise to lateral pushes on the intermediate spirals, in order to deform said spirals, which alongside a displacement of the spirals, results in the same passing from a conventional "S" shape to an approximate "Z" shape, the thermal treatment of the spring assembly being carried out in order to achieve the definitive conversion thereof.

FIG. 8

EP 2 719 480 A1

**(Cont. next page)**

FIG. 10

**Description**

**OBJET OF THE INVENTION**

The present invention relates to a spring for directional damping presenting the particularity of being a spring provided with spirals having a special shape, such that when the spring is compressed due to an incident force, it provides a response not only in the direction opposite to the incident force, but also the reaction force decomposes into one opposite force and into another force perpendicular to the incident force, so upon compressing the spring there will be a displacement in the cross-wise direction to the compressive force, thus achieving a directional damping.

The invention also relates to the method for manufacturing said spring for directional damping, as well as the device for implementing the method itself.

The object of the invention is to make bodies such as mattresses, pillows, cushions, seats and the like, in which a spring such as the spring of the invention is applicable, provide a directional damping which produces a gentle stretching of the person lying on the mattress itself or resting their body or back against the back of a chair, as a result of the decomposition of forces, into two forces, one in the opposite direction to the incident force, and the other in the cross-wise direction, which provide greater comfort and a gentle stretching in the desired region, in addition to reducing pressure points and improving weight distribution.

**BACKGROUND OF THE INVENTION**

As is known, the damping provided by a body, and which may correspond to a mattress, a seat, a cushion, a pillow, etc., is effected through pressure without deflection, so that the damping effect is limited and will naturally depend on the density of the corresponding body.

Nevertheless, the Invention Patent number 200801948, discloses a body with a directional damping system based on the idea that, regardless of the material from which the body is formed and the greater or lesser degree of density thereof, it is provided with a series of hollows or housings arranged obliquely, with one shape or another, so that when applied, for example, to a mattress, a pillow, or to any region of a rest element, a directional damping is achieved.

Likewise, patent 200801947, discloses a directional damping system, which is based, in this case, on the idea that the body - which may be a seat, a mattress, etc. - has two distinguishable parts, which are provided with depressions and protrusions that interact alternatively, with various densities and are arranged obliquely, making it possible to deflect the course of the force applied when the user rests on the body, be it a mattress, a seat etc., thereby achieving an optimal damping effect.

The problem with these solutions is that, in the first case indicated, the body forming the damping system should be provided with inclined housings, which is why it is necessary to resort to expensive specialized manufacturing techniques in order to implement the embodiment of these housings or hollows and, in the second case, the body should be formed by two elements, with different density regions that interact alternatively with one another, combining inclinations and adequate sections of one part relative to those of the other, which also complicates the manufacturing thereof, resulting in a solution which is complicated to carry out.

Furthermore, the present system based on springs is much more durable than previous systems, based on the use of materials with a shorter useful life.

**DESCRIPTION OF THE INVENTION**

The spring for directional damping proposed herein has been designed to solve the aforementioned problems, on the basis that in the case of, for example, a mattress or even a seat, the classical and conventional springs comprised in this type of objects, rather than being conventional springs, they would be springs provided with specially shaped spirals, which may have a segment or arm shorter than the other segment or arm of the same spiral, in which the angles formed by the arms of the spirals together with the horizontal reference plane would be variable, in such a way that in a mattress, seat or similar it would only be necessary to place springs with these modified spirals, rather than placing springs with traditional spirals, the economic cost therefore being minimal, given that the body in which it is applied does not require any special characteristic, instead it only requires to be provided with one type of spring or another, as already mentioned above.

The shape of the spirals of the spring, object of the present invention, has been modified adequately such that the form they will take in a side view would resemble a "Z", in comparison to being configured more like an "S" as in conventional springs, in such a way that when the spring is compressed there will be a displacement and a force in a cross-wise direction to the compression force, the lower spiral remaining fixed, i.e. that of the opposite end to that on which the pressure is exerted, whilst the upper spiral, i.e. on which pressure is exerted, will be displaced in a cross-wise direction until it reaches its final position.

The displacement of the spirals in a cross-wise direction would depend on the arrangement of the intermediate and asymmetric point, which is at one side or another of the complete spiral, in such a way that if it remains at one side, the displacement will be in one direction and if it remains at the opposite side, the movement will be in the opposite direction, so arranging springs with one displacement type or another, different damping types would be produced, for example in a mattress, with the subsequent advantages being derived therefrom.

Obviously, the spring may be formed from any kind of appropriate material, preferably wire, without discarding other materials, it may also be configured in one or another way, be a cylindrical, conical, biconical or bagged spring, etc., and have a variable number of spirals, moreover, the thickness and diameter of the spirals, the inclination degrees for the arms or segments, always according to the intended rigidity, flexibility, force, damping and movement, might be variable as well.

It should also be noted that the spirals belonging to one single spring may all be equal or they may even be different, in such a way that in any case, when force is applied to the spring, the course of the force is successfully dampened and deflected.

In the application of a spring mattress, according to the invention, assemblies of springs which generate a force and displacement towards one side and assemblies which generate said force and displacement in the opposite direction, may exist, as mentioned above, always with the aim of achieving the desired effect, which, in the case of a mattress, one of the aims is to provide the user with a gentle stretching of his/her body, given that a soft traction is generated, which facilitates vertebral decompression during the rest period

Optionally, the structure described may be complemented with sectors in which conventional springs or other equally conventional cushioning elements or materials (foam, etc.) are established. In short, depending on the objective sought, it is possible to create different combinations of modified springs, according to the objective of the present invention or conventional springs or combinations of both, in any part of the mattress or seat, in turn playing with regions not provided with springs, but simply solid regions made of any kind of material which is suitable for supporting forces, such as foam, latex, etc.

In the event of being applied to a seat, in the back region, a gentle stretching is generated in an ascending direction, and in the region of the seat base it is possible to successfully adjust the user's body in the backrest direction.

The invention also relates to the method for manufacturing the spring described above, based on a wire spring manufactured according to any of the techniques currently known in the state of the art, the spirals of which, when viewed in profile, have a shape similar to an "S", as is the case in conventional springs whose spring may have any shape, either cylindrical, conical, biconical, etc., and have a variable number of spirals.

Specifically, by means of the device and method developed, the form of the spirals in this conventional spring is modified, until their form is similar to that of a "Z" when viewed in profile, in such a way that when the spring is compressed, there is a displacement and force in the cross-wise direction to the compression force.

The method for modifying the form of the spirals comprises the following operative stages:

- Positioning the spring in the manufacturing device and fastening the upper and lower spirals thereof, i.e. the outer spirals
- Pushing one of the sides of the spirals, being it possible for the spirals that are interspersed with the previous ones as well as those on the other side to be pushed in the opposite direction or may remain abutting against fixed, immobile elements, in order to carry out the deformation.
- Thermal treatment of the spring assembly (tempering) in order to successfully make the new shape of the same definitively permanent. This thermal treatment may be carried out once the deformation of the spirals has been achieved by means of the aforementioned thrust, in order to achieve the desired "Z" form, or else, it may be possible, when the characteristics of the wire suggest so, to carry out this stage prior to pushing. This second option is especially recommended when the wires are more rigid, and consequently the thrust forces should be very high. Upon carrying out a prior thermal treatment, said forces on the spring are reduced, thus facilitating the deformation thereof and ensuring that the physical properties of the spring are not affected.

The methods used to carry out said method, i.e., the device that also forms part of the invention, is based on using a number of means which may be formed by two or more clamps, to fix and immobilize the upper and lower spirals of the spring, as well as one or more pushing elements, formed, for example, by cylinders located at one of the sides of the spring and one or more pushing elements or cylinders located at the opposite side or abutment elements for the spirals which concur on this side, in such a way that the pushing elements would apply pushing forces in specific regions of the spring spirals, in order to achieve the desired change in their form, so the cylinders constituting the pushing elements will have pushers provided to this end, so they are able to act in different directions to push specific regions of the spirals in one direction or another and to achieve the desired change in form.

The device is actuated in the spring thermal treatment stage, acting previously, subsequently or right at the moment on which the thermal treatment is applied, so when the spring is positioned correctly and the end spirals are fastened, the thrusts are exerted in specific regions of the spring spirals, in such a way that with the help of the thermal treatment to which the spring is submitted, the definitive form of the spring, the originally "S" shaped spirals, is successfully transformed into a spring with definitive "Z" shaped spirals.

Finally, it should be added that the spring will be complemented with a supporting arm to carry out its displacement from one stage to another, with the particularity that this element or arm will be isolated from the power supply.

## DESCRIPTION OF THE DRAWINGS

In order to complement the following description and with the aim of facilitating a better understanding of the invention and its characteristics, according to a preferred practical embodiment thereof, as an integral part of said description, below is a set of drawings in which by way of non-limiting examples, the following has been illustrated:

Figure 1.- Exhibits a representation of a spring for directional damping, realized according to the object of the invention, at rest, wherein it is possible to observe how the spirals define shapes similar to a "Z".

Figure 2.- Exhibits a view of the spring of the previous figure in compressed position, revealing the cross-wise displacement towards one side undergone by the spirals of the spring itself.

Figure 3. - Exhibits a practical application of the spring, object of the invention, in a mattress, the springs being in a compressed position, and the spirals displaced towards one side or another, and with a central region provided with conventional springs.

Figure 4.- Exhibits another practical application of the spring, object of the invention, in this case in an armchair , occupied by a user who, upon pressing on the seat and backrest thereof when resting, causes the springs compression and the according cross-wise displacement of the spirals.

Figure 5.- Exhibits a series of views corresponding to a cinematic analysis of a conventional "S" type spiral.

Figure 6.- Exhibits a series of views similar to those shown in Figure 5, but corresponding to a "Z" type spiral.

Figure 7. - Exhibits some of the many possible "Z" type spiral shapes and the sign of their displacements.

Figure 8.- Exhibits the comparative cinematic analysis of three complete springs based on "S" type spirals, represented on the upper part, and confronted to three additional "Z" type spirals, represented on the lower part , with different cylindrical, conical or biconical shapes.

Figure 9. - Exhibits a perspective view of the device used for deforming a spring with "S" spirals, in order to obtain a modified spring with "Z" spirals, which corresponds to the spring for directional damping to be achieved.

Figure 10. - Exhibits a perspective view of the same assembly represented in the previous figure, in the stage in which the device is being

operated.

## PREFERRED EMBODIMENT OF THE INVENTION

Before going on to describe the embodiment in question, it must be clarified that when a conventional "S" type spiral is compressed vertically, there is only a displacement in the vertical direction, the same occurring in a spring with various spirals.

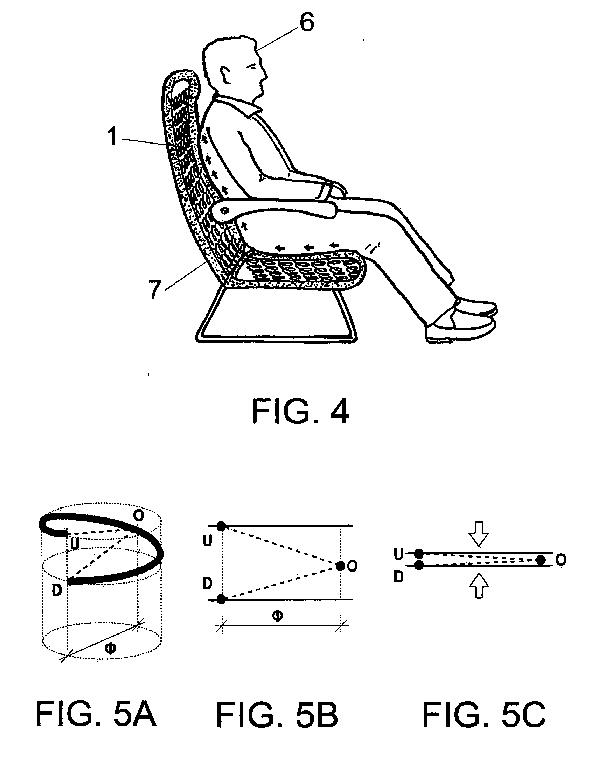

More specifically, as it can be observed in Figure 5, in a conventional "S" type spiral, the distances UO and DO are equal and the points U and D are always in the same vertical, throughout the compression of the spiral, without horizontal displacement taking place.

However, in a "Z" spiral, where the arms are not equal, when the spiral is compressed, a horizontal displacement takes place, in addition to the logical vertical displacement, in such a way that this displacement may be carried out at one side or the other, depending on the orientation of the spiral, the same happening when a spring with various spirals is concerned.

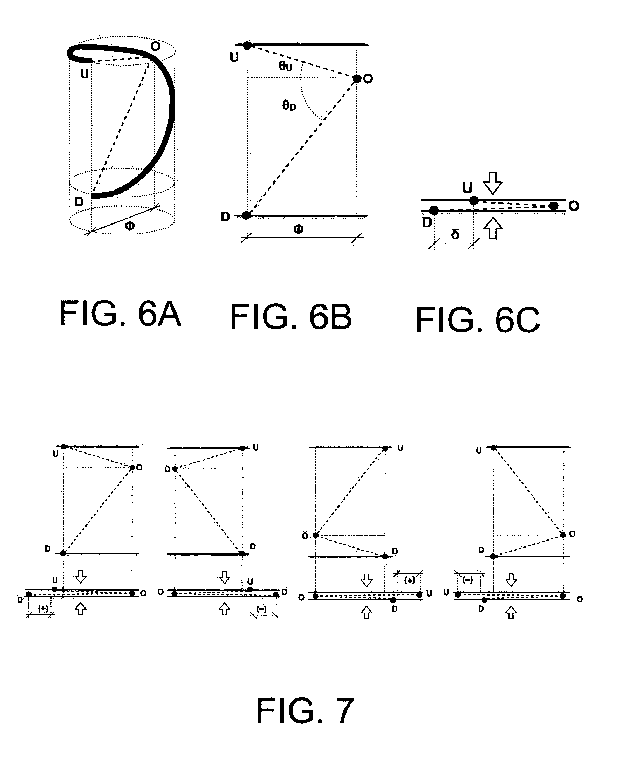

More specifically, according to an example shown in Figure 6, in the case of a "Z" spiral, the geometry of the spiral is not symmetrical, one of the arms thereof being shorter than the other. This forces the spiral, once compressed, to have a net horizontal displacement between points U and D, according to:

$$\delta = \pm\, \Phi\, |(1/\cos(\theta_U) - 1/\cos(\theta_D))|$$

wherein $\theta_U$ and $\theta_D$ are the angles that each arm of the spiral, at rest, forms with the horizontal plane, and $\Phi$ is the diameter of the projected circumference of the spiral, as shown in Figures 5A and 6A.

The sign in the former equation is a function of the orientation of the spiral.

Conventionally, we might take the shape shown in Figure 6 as being positive: the upper point of the spiral displaces towards the right of the lower point.

In Figure 7, the various possible spiral shapes and the sign of their movements are shown. In this case, the behavior under compression is shown from both sides of the spiral, leaving fixed the horizontal reference plane on which the O point is positioned. Please note that in the direction of displacement, only the arrangement of the UOD triangle has influence and not the rotational direction of the spiral. It must be noted that the ends of the spiral represented in the figure, with the letters U and D do not necessarily have to be at different sides of the horizontal reference plane established by the O point. A spirals shape, with both points U and D being above or below the horizontal reference plane established by the O point, would also be completely valid and have the same effect.

In the case of the complete spring, and as a result of the above, the use of the "Z" spirals would give rise to a horizontal displacement between the upper and lower end of the spring, the maximum value of which may be deduced using the previous equation.

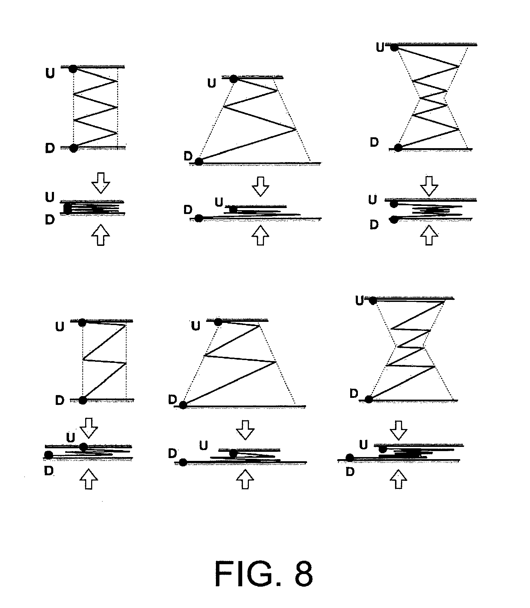

Considering a cylindrical, conical or biconical spring, such as those shown in Figure 8, does not change what has been expressed above, as can be deduced from said figure, although the values of the horizontal displacement would be a function of the geometry and number of "Z" spirals.

More specifically, if $\Phi i$ is the diameter (in projection) of each "i" spiral, and $\theta_{Ui}$ and $\theta_{Di}$ are the angles that said "i" spiral forms with the horizontal, the total maximum displacement would be equal to:

$$\Delta = \Sigma\, \alpha i\, \Phi i\, |(1/\cos(\theta_{Ui}) - 1/\cos(\theta_{Di}))|$$

The summation being extended to all the "Z" spirals. The parameter $\alpha_i$ has the value $\pm 1$ as a function of the geometry of the "Z" spiral, according to what is shown in said Figure 7.

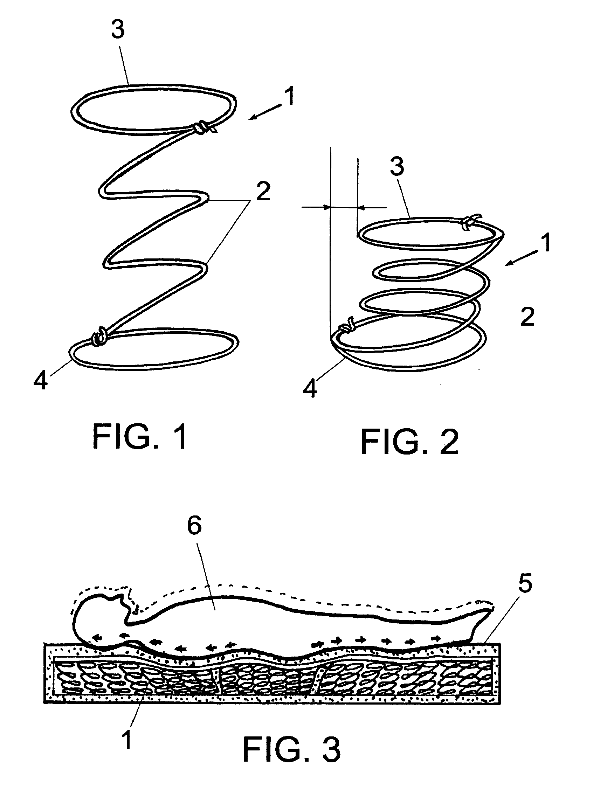

Therefore, bearing in mind what has been expressed above, the spring of the invention, generally referenced with the number (1), has a plurality of modified spirals (2), upon having actuated on the angles $\theta_U$ and $\theta_D$, which are formed by each arm of the spiral at rest, together with the horizontal plane, therefore providing it with what is referred to as a special "Z" shape, the spirals (2) of which are comprised between one spiral considered as the upper spiral (3) and another considered as the lower spiral (4), as clearly represented in Figures 1 and 2.

According to this special shape of the spirals (2), whenever a compression force is exerted on the spring (1), the spirals (2) and therefore the upper spiral (3), undergo a cross-wise displacement towards one of the sides, as clearly represented in Figure 2. In other words, during compression, the lower spiral (4), shown in Figures 1 and 2, remains fixed, whilst the upper spiral (3) and the intermediate spirals (2) thereof are displaced in a cross-wise direction until reaching their final position, shown in Figure 2. The horizontal displacement will be determined by a value "δ", as is explanatorily detailed in Figure 6, the magnitude of which may be determined mathematically as a function of the variables specified above.

If the spring described is applied, for example, to a mattress (5), as represented in Figure 3, and providing regions of springs in which the corresponding spirals are displaced to one side or another, logically depending on the orientation of the spirals, a damping and deflection of the course of the force is achieved, having an effect on the person who is supported, in this case on the mattress (5), the person or individual (6) having been represented on this mattress, the springs (1) are thus compressed and therefore the spirals have been displaced in a cross-wise direction.

In this way, in the example shown in Figure 3, two groups of end springs oriented in opposite directions would be integrated, in such a way that upon leaning on said end regions , a displacement in the external direction is produced, which produces a gentle stretching in the back and legs of the individual (6).

As it can be seen in said Figure 3, the springs of the invention may be complemented with conventional springs, such as those used in the mid region of the mattress or with other damping elements, such as foam etc., without this affecting the essence of the invention. In the specific case of this Figure 3, the central region has been represented provided with conventional springs, although it is perfectly possible for this region not to have springs and be made, simply, from any of the resistant elements usually employed in the manufacturing of mattresses, such as foam, latex, etc.

This damping and deflection of the course of the force produced by the compression, i.e. by the weight of the individual resting (6) on the mattress (5) gives rise to a gentle stretching of the individual's body, given that a soft traction that favors vertebral decompression during the resting time is generated, as a result of the springs (1) presence, the arrangement of which generates a force and displacement towards one side and of that of springs which, due to the arrangement of their spirals, generates the force and displacement towards the opposite side thus achieving the desired effect.

Preferably, in order to better direct the forces, the groups of springs arranged in a same direction would be grouped or joined together, in order for them to work as a single uniform block.

When applied to an armchair or seat (7), as shown in Figure 4, where this seat or armchair (7) includes the corresponding springs of the invention (1), the individual (6) who sits down, when leaning his/her buttocks against the seat portion and his/her back against the backrest of said armchair or seat (7), the deformation is produced, i.e. the compression and corresponding deformation of the springs (1), displacing their spirals towards one side relative to the end spiral opposite to that on which the individual (6) is leaning, as shown in Figure 4, so the armchair or seat (7) conforms perfectly the body of the individual (6) which ultimately adopts a more ergonomic and relaxing posture, with less tension for the back, all based on the damping effects provided by the springs (1) with their special shape and embodiment.

The spring wire in each one of the two ends thereof may be fixed or loose. One of the two most common options is that the ends are always fixed to the lower and/or upper elements of the mattress structure, but in the event of these being "bagged" springs, i.e. those which are contained in sleeves, it is possible for them not to be fixed to the mattress structure, given that the sleeves are already joined together.

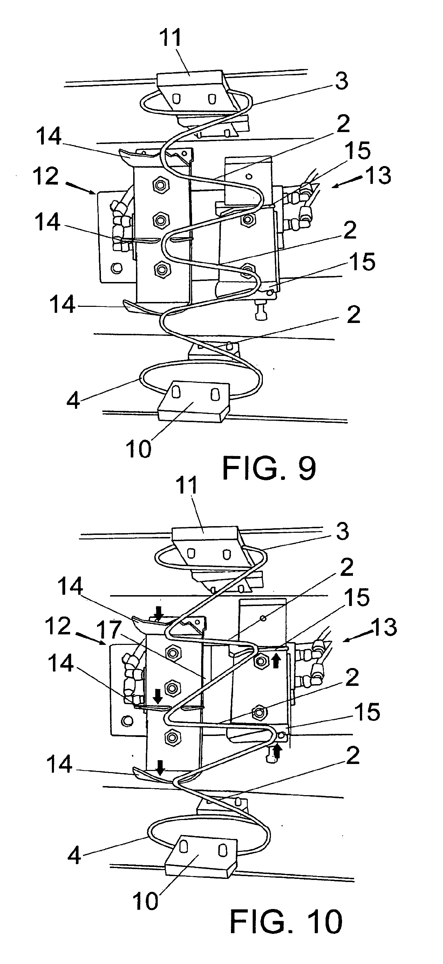

The spring described will be obtained based on the method, which forms part of the object of the invention, namely a method that is carried out by means of the device represented in Figures 9 and 10, always based on an "S" spiral spring or traditional spring.

Therefore, in those Figures 9 and 10, said traditional spiral spring is fastened via its end spirals (3, 4), by means of a number of fastening elements, which may be formed by two clamps (10, 11) respectively, in such a way that in the embodiment shown, a pair of side cylinders (12, 13) are included, which are pneumatic, although they may be any other kind of element provided with pushing means (14, 15), in each case, to push specific regions of the side ends corresponding to the intermediate spirals (2), likewise pushing in an ascending and descending direction on the same spirals.

Clearly, the operation and therefore the thrust may be carried out by any kind of device, although the represented form corresponds to pneumatic cylinders with a variable trajectory, always with the aim of pushing specific regions of the spirals (2) of the spring, in order to successfully change the form thereof and pass from spirals with a form resembling an "S" when viewed from the side, as is traditionally the case and is shown in Figure 9, to spirals with a form resembling a "Z" when viewed from the side, as shown in Figure 10, wherein the device is in the operating stage.

As already mentioned above, each cylinder (12, 13) may have one or more pushing means (14, 15) respectively, with a certain trajectory, acting in one direction on one or various regions of the spirals (2) of the spring, where the assembly of the device may be formed by various cylinders (12, 13) or other types of actuation means and be able to actuate in different directions in order to push specific regions of the spirals in one direction or another and achieve the change in their form.

The device will be actuated in the thermal treatment stage of the spring (tempering), in such a way that with the help of the temperature reached by the spring, the transformation and the definitive permanence over time of the new shape of the spring itself will be achieved.

The expression "thermal treatment" employed herein should be understood as any method comprising heating the wire that constitutes the spring to a certain temperature over a period of time, followed by its cooling at the suitable rates with the aim of improving its physical and mechanical properties. It may therefore involve any treatment using electric currents, electromagnetism or direct heating to suitable temperatures, so that the wire adopts the desired molecular structure and functionality. In the present invention, a treatment using electrical currents or discharges applied to both ends of the spring, followed by cooling to room temperature, is regarded to be the preferred thermal treatment.

When the device is acting on the spring, its form may differ to that finally achieved, given that in order to obtain the final form desired, it is necessary to push the spirals along a longer trajectory to compensate for the subsequent recoil.

It should also be noted the fact that the device may include a type of pneumatic cylinder (12) or other actuation means at one side, with their respective pushers (14), whilst on the opposite side, rather than there being a second cylinder (13), there will be a number of abutments or fastening elements in specific regions of the spirals (2), to form a lever when the pushers (14) operate from the other side, in such a way that said fastening elements or abutments may be fixed or operated in any other way.

Finally, it must be noted that in order to manipulate the spring from one stage to another, a fastening arm (17) is used, which in the present case would be conveniently isolated from the electric current.

**Claims**

1.  Spring (1) for directional damping, intended to be applied in bodies such as mattresses, seats, cushions or pillows, configured from an upper spiral (3), a lower spiral (4), which is fixed and by a variable number of intermediate spirals (2), **characterized in that** one or more of the intermediate spirals (2) of the spring (1) are configured in such a way that when compressing the spring (1), the spirals (2) undergo a displacement in a cross-wise direction to the compression force itself, the value of which depends on the length of the arms of the spiral UO and OD and on the angles $\theta_U$ and $\theta_D$, which each arm of the spiral in resting position forms together with the horizontal plane, the direction of the displacement being determined by the arrangement of the imaginary triangle (UOD) which is formed by the two arms of the spiral.

2.  Spring for directional damping, according to claim 1, **characterized in that** in a resting position, the angles $\theta_U$ and $\theta_D$ that the arms of the spiral UO and OD , respectively, form, together with the horizontal, are different.

3.  Spring for directional damping, according to the previous claims, **characterized in that** the lower spiral (4) of the spring (1) remains fixed when the same is compressed, whilst the intermediate spirals (2) and the upper spiral (3) upon which pressure is exerted, are displaced in a cross-wise direction to one side or the other depending on the orientation of the spirals.

4.  Spring for directional damping, according to claim 1, **characterized in that** the spring (1) is preferably formed from a wire material and may have a cylindrical, conical, bagged, biconical or similar shape.

5.  Spring for directional damping according to the previous claims, **characterized in that** the number of spirals of the spring (1) is variable, its geometry being equally variable.

6.  Spring for directional damping according to the previous claims, **characterized in that** when the spring (1) forms part of a group of springs arranged in the same direction, the springs (1) are grouped or joined together so that they work as a single uniform block.

7.  Method for manufacturing a spring for directional damping, corresponding to the spring of the previous claims, **characterized in that** it consists in the following operative stages:

    - POSITIONING: Positioning of a conventional wire spring with a variable number of spirals, which, when seen in profile, have a shape similar to that of an "S", and its fastening via its end spirals (3, 4);
    - THRUST: Pushing on the lateral regions of the intermediate spirals (2) in order to deform the same until, when seen in profile, present a shape similar to that of a "Z".
    - TEMPERING: Thermal or tempering treatment for the spirals (2), the form of which has been modified in order to achieve definitive permanence over time of their new shape.

8.  Method for manufacturing a spring for directional damping according to claim 7, **characterized in that** the sequential order in which the operative stages take place is as follows: POSITIONING, THRUST and TEMPERING.

9.  Method for manufacturing a spring for directional damping according to claim 7, **characterized in that** the sequential order in which the operative stages take place is as follows: POSITIONING, TEMPERING and THRUST.

10. Method for manufacturing a spring for directional damping according to claim 7, **characterized in that** the sequential order in which the operative stages take place is as follows: POSITIONING and simultaneous THRUST - TEMPERING.

11. Method for manufacturing a spring for directional damping according to any one of the claims 7 to 10, **characterized in that** the thermal treatment is carried out by means of electrical currents or discharges, applied to both ends of the spring, followed by its cooling at room temperature.

12. Device for carrying out the method for manufacturing a spring for directional damping according to claims 7 to 11, **characterized in that** it comprises clamps or other means (10, 11) for fastening the end spirals (3, 4) of the spring, including further pushing means (14, 15) which act on certain specific regions of the intermediate spirals (2), according to convenient directions, and laterally to those intermediate spirals (2), in order to deform them.

**13.** Device for carrying out the method for manufacturing a spring for directional damping , according to claim 12, **characterized in that** the pushing elements are preferably formed by cylinders (12, 13) established on both sides of the intermediate spirals (2) of the spring, whose cylinders (12, 13) are pneumatic and have corresponding pushing means (14, 15) for the pushing and pertinent deformation of the intermediate spirals (2).

**14.** Device for carrying out the method for manufacturing a spring for directional damping, according to claims 12 and 13, **characterized in that** on one of the sides, a number of pushing means have been envisaged (15), which may be linked to one or more pneumatic cylinders (12) or other actuation means, and on the opposite side, there are abutments or abutting elements for the corresponding intermediate spirals (2), so the thrust of the means (14) on the opposite side, results in the deformation of said intermediate spirals (2).

**15.** Device for carrying out the method for manufacturing a spring for directional damping, according to claims 12, 13 and 14, **characterized in that** in the lateral thrust of the intermediate spirals (2) a number of thrusts in an opposite longitudinal direction, are also carried out, and alternatively onto one spiral and another, in order to obtain, in addition to tempering and deforming the spring, the definitive spring with approximately "Z" shaped spirals.

FIG. 1

FIG. 2

FIG. 3

FIG. 4

FIG. 5A    FIG. 5B    FIG. 5C

FIG. 6A    FIG. 6B    FIG. 6C

FIG. 7

FIG. 8

FIG. 9

FIG. 10

# INTERNATIONAL SEARCH REPORT

| International application No. |
| --- |
| PCT/ES2012/000154 |

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
B21F, A47C, F16F

Documentation searched other than minimum documentation to the extent that such documents are included in the fields searched

Electronic data base consulted during the international search (name of data base and, where practicable, search terms used)

EPODOC, INVENES, WPI

C. DOCUMENTS CONSIDERED TO BE RELEVANT

| Category* | Citation of document, with indication, where appropriate, of the relevant passages | Relevant to claim No. |
| --- | --- | --- |
| X | US 2006042016 A1 ( BARMAN BRUCE G ET AL.) 02/03/2006, description: paragraphs [3, 4, 6, 8, 43, 46, 49, 53]; figures. | 1-6 |
| A | WO 9637320 A1 (SLEEPYHEAD MANUFACTURING COMPA ET AL.) 28/11/1996, description: pages 4-5, 7-8, 11-13; figures. | 1-15 |
| A | WO 2005007563 A1 (ANAGNOSTOPOULOS PANAGIOTIS ET AL.) 27/01/2005, description: page 9; figures. | 7-15 |
| A | ES 2089262 T3 (BRUENINGHAUS KRUPP GMBH ) 01/10/1996, description: column 1, line 1-45; column 3, line 5-25; figures. | 7-15 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 01/10/2012 | **(08/10/2012)** |

| Name and mailing address of the ISA/ | Authorized officer |
| --- | --- |
| OFICINA ESPAÑOLA DE PATENTES Y MARCAS<br>Paseo de la Castellana, 75 - 28071 Madrid (España)<br>Facsimile No.: 91 349 53 04 | E. Pértica Gómez<br><br>Telephone No. 91 3493271 |

Form PCT/ISA/210 (second sheet) (July 2009)

## INTERNATIONAL SEARCH REPORT

| | International application No. |
|---|---|
| | PCT/ES2012/000154 |

C (continuation). DOCUMENTS CONSIDERED TO BE RELEVANT

| Category * | Citation of documents, with indication, where appropriate, of the relevant passages | Relevant to claim No. |
|---|---|---|
| A | GB 1459948 A (FRANCE BED CO ) 31/12/1976, description: page 6, line 65 - page 7, line 27; figures. | 7-15 |
| A | US 4986103 A (JACOBSON D JOHN ) 22/01/1991, description: page 4, line 50 - page 5, line 15; figures. | 7-15 |
| A | EP 0899035 A2 (WELLS CO FRANK L ) 03/03/1999, description: paragraphs [5-9]; figures. | 7-15 |

Form PCT/ISA/210 (continuation of second sheet) (July 2009)

## INTERNATIONAL SEARCH REPORT

Information on patent family members

| | International application No. |
| --- | --- |
| | PCT/ES2012/000154 |

| Patent document cited in the search report | Publication date | Patent family member(s) | Publication date |
| --- | --- | --- | --- |
| US2006042016 A | 02.03.2006 | US7178187 B | 20.02.2007 |
| | | CA2578144 A | 09.03.2006 |
| | | AU2005280479 A | 09.03.2006 |
| | | WO2006026062 A | 09.03.2006 |
| | | AR050535 A | 01.11.2006 |
| | | EP1784099 A | 16.05.2007 |
| | | EP20050779618 | 01.08.2005 |
| | | KR20070057164 A | 04.06.2007 |
| | | US2007169275 A | 26.07.2007 |
| | | US7404223 B | 29.07.2008 |
| | | MX2007002292 A | 08.10.2007 |
| | | CN101052331 A | 10.10.2007 |
| | | TR200702097 T | 21.01.2008 |
| | | JP2008511391 A | 17.04.2008 |
| | | BRPI0514799 A | 24.06.2008 |
| WO9637320 A | 28.11.1996 | AU5847696 A | 11.12.1996 |
| | | ZA9604251 A | 27.11.1997 |
| WO2005007563 A | 27.01.2005 | GR2003100304 A | 28.03.2005 |
| ES2089262 T | 01.10.1996 | DE4124326 C | 16.04.1992 |
| | | EP0526689 AB | 10.02.1993 |
| | | EP19920103923 | 07.03.1992 |
| | | AT137810 T | 15.05.1996 |
| GB1459948 A | 31.12.1976 | JP50072860 A | 16.06.1975 |
| | | JP50126562 A | 04.10.1975 |
| | | JP54023352 B | 13.08.1979 |
| | | JP994771 C | 22.04.1980 |
| | | JP51033760 A | 23.03.1976 |
| | | JP54002192 B | 03.02.1979 |
| | | JP970380 C | 31.08.1979 |
| | | US3993106 A | 23.11.1976 |
| | | PH12448 A | 08.03.1979 |
| US4986103 A | 22.01.1991 | NONE | |
| EP0899035 A | 03.03.1999 | CA2245459 A | 28.02.1999 |
| | | CA2245454 A | 28.02.1999 |
| | | EP19980306639 | 19.08.1998 |
| | | EP0899034 AB | 03.03.1999 |
| | | EP19980306634 | 19.08.1998 |
| | | JP11147151 A | 02.06.1999 |
| | | JP11151541 A | 08.06.1999 |
| | | NZ331526 A | 29.06.1999 |
| | | US5930897 A | 03.08.1999 |
| | | US5950473 A | 14.09.1999 |
| | | NZ331525 A | 28.01.2000 |
| | | US2002017334 A | 14.02.2002 |
| | | US6430982 B | 13.08.2002 |

Form PCT/ISA/210 (patent family annex) (July 2009)

## INTERNATIONAL SEARCH REPORT

Information on patent family members

International application No.

PCT/ES2012/000154

| Patent document cited in the search report | Publication date | Patent family member(s) | Publication date |
|---|---|---|---|
| | | DE69819256 T | 26.08.2004 |
| ------------------------------------------- | --------------------- | ----------------------- | -------------- |

Form PCT/ISA/210 (patent family annex) (July 2009)

## INTERNATIONAL SEARCH REPORT

| International application No. |
| --- |
| PCT/ES2012/000154 |

**CLASSIFICATION OF SUBJECT MATTER**

*B21F27/16* (2006.01)
*A47C27/06* (2006.01)
*B21F35/02* (2006.01)
*F16F1/04* (2006.01)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200801948 A
- WO 200801947 A